**Europäisches Patentamt**

**European Patent Office**

**Office européen des brevets**

(11) Veröffentlichungsnummer: **0 071 614**
**B1**

(12) **EUROPÄISCHE PATENTSCHRIFT**

(45) Veröffentlichungstag der Patentschrift:
**27.11.85**

(51) Int. Cl.⁴: **F 23 N 5/10,** G 01 K 7/02

(21) Anmeldenummer: **82900345.8**

(22) Anmeldetag: **18.01.82**

(86) Internationale Anmeldenummer:
**PCT/DE 82/00012**

(87) Internationale Veröffentlichungsnummer:
**WO 82/02760 (19.08.82** Gazette 82/20)

(54) **THERMOELEKTRISCHE ZÜNDSICHERUNG.**

(30) Priorität: **14.02.81 DE 8104060 U**

(43) Veröffentlichungstag der Anmeldung:
**16.02.83 Patentblatt 83/7**

(45) Bekanntmachung des Hinweises auf die Patenterteilung:
**27.11.85 Patentblatt 85/48**

(84) Benannte Vertragsstaaten:
**DE FR GB NL**

(56) Entgegenhaltungen:
EP - A - 0 050 678
DE - C - 919 063
FR - A - 2 427 552
US - A - 2 647 237
US - A - 2 710 181
US - A - 3 617 886

(73) Patentinhaber: **Joh. Vaillant Gmbh u. Co, Berghauser Strasse 40 Postfach 10 10 20, D-5630 Remscheid 1 (DE)**
(84) Benannte Vertragsstaaten: **DE**

(73) Patentinhaber: **VAILLANT S.A.R.L, 4, Rue des Oliviers Orly-Sénia 326, F-94537 Rungis Cedex (FR)**
(84) Benannte Vertragsstaaten: **FR**

(73) Patentinhaber: **Vaillant Ltd., Vaillant Building, Aerodrome Way Heston Industrial Estate, GB-Hounslow, Middx. TW5 9QB (GB)**
(84) Benannte Vertragsstaaten: **GB**

(73) Patentinhaber: **SCHONEWELLE B.V., Ellermanstraat 17, NL-1099 BX Amsterdam (NL)**
(84) Benannte Vertragsstaaten: **NL**

(72) Erfinder: **ORTLINGHAUS, Urlich, Sternstrasse 22, D-5630 Remscheid (DE)**

(74) Vertreter: **Heim, Johann-Ludwig, c/o Joh. Vaillant GmbH u. Co Postfach 10 10 20 Berghauser Strasse 40, D-5630 Remscheid 1 (DE)**

## Beschreibung

Die vorliegende Erfindung bezieht sich auf eine Anordnung von zwei in Serie beziehungsweise parallel geschalteten Thermoelementen gemäss den Oberbegriffen der Hauptansprüche.

Thermoelemente werden bekanntlich zur Temperaturmessung und insbesondere in Sicherheitseinrichungen gegen Übertemperaturen vielfältig verwendet. Bei solchen Sicherheitseinrichtungen ist es häufig notwendig, dass Temperaturmesswerte unterschiedlicher Stellen miteinander verglichen werden und dass bei Über- beziehungsweise Unterschreiten eines Grenzwertes ein Sicherheitsstellglied zu betätigen ist.

Die US-A-2710181 zeigt eine Steuervorrichtung für einen Gasheizer, der einen Haupt- und einen Zündbrenner aufweist, wobei zwei Thermoelemente vorgesehen sind, die ein Zündsicherungsventil beaufschlagen. Hierbei ist ausgeführt, dass keins der Thermoelemente allein fähig ist, das Ventil offen zu halten. Das Wesentliche dieses Standes der Technik liegt also darin, dass die beiden Thermoelemente sowohl dem Haupt- als auch dem Zündbrenner zugeordnet sind und das dem Hauptbrenner zugeordnete durch einen Heizwiderstand beheizbar ist. Dies ist deswegen vorgesehen, um ein Offenhalten des thermoelektrischen Zündsicherungsventils zu gewährleisten, wenn wegen Erlöschens des Hauptbrenners das mit diesem in Serie liegende zweite Gasventil geschlossen wird. Da der Zündbrenner zwischen beiden Ventilen an die Hauptgasleitung angeschlossen ist, bleibt er brennen, obwohl der Hauptbrenner erlischt.

Der vorliegenden Erfindung liegt die Aufgabe zugrunde, eine Anordnung unter Verwendung wenigstens zweier Thermoelemente zu schaffen, wobei jedes der Thermoelemente einer besonderen Wärmequelle zugeordnet ist und jedes der Thermoelemente einen Elektromagneten zu betätigen imstande ist.

Die Lösung dieser Aufgabe gelingt bei einer Anordnung gemäss dem Oberbegriff erfindungsgemäss mit den im kennzeichnenden Teil des Hauptanspruchs angegebenen Merkmalen.

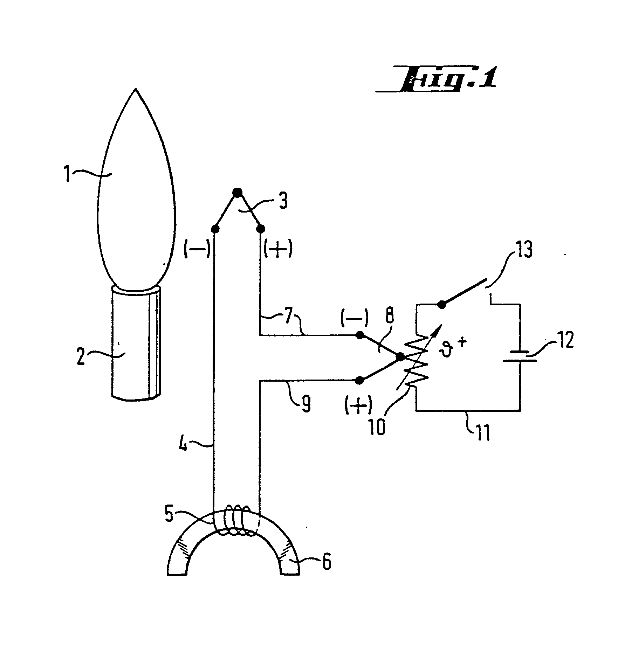

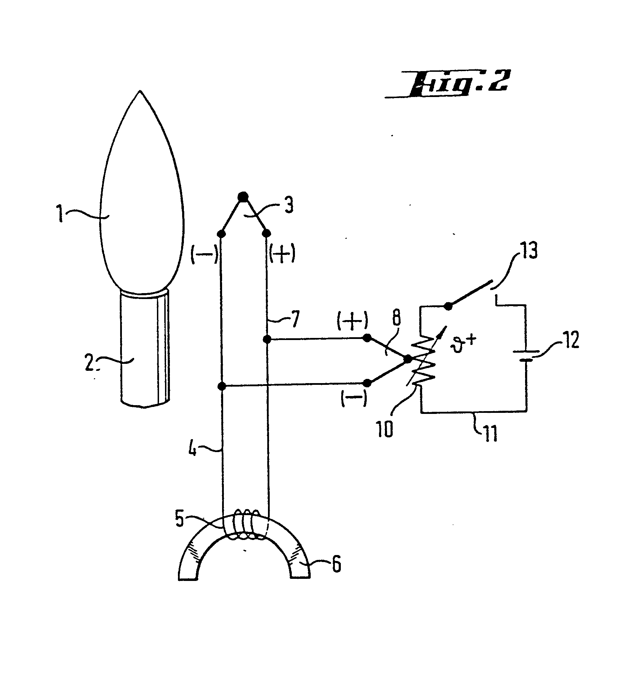

Eine weitere Ausgestaltung geht aus dem Unteranspruch hervor. Zwei Ausführungsbeispiele der Erfindung sind anhand der Figuren eins und zwei der Zeichnung näher erläutert.

Es zeigen

Figur eins eine schematische Darstellung der Serienschaltung zweier Thermoelemente.

Figur zwei eine schematische Darstellung einer Parallelschaltung zweier Thermoelemente.

In beiden Bezeichnungen bedeuten gleiche Bezugszeichen jeweils die gleichen Einzelheiten.

Einem mit einer Flamme 1 brennenden Brenner 2, insbesondere einem Zündbrenner eines gasbeheizten Umlaufwasserheizers, ist ein Thermoelement 3 örtlich zugeordnet, so dass die Flamme 1 die warme Lötstelle des Thermoelements 3 beheizen kann. Das Thermoelement 3 ist über eine Leitung 4 unmittelbar mit einer Spule 5 eines Elektromagneten 6 verbunden. Die zweite Zuleitung 7 zum Thermoelement 3 führt zu einem weiteren Thermoelement 8, dessen Rückleitung 9 mit dem anderen Ende der Spule 5 des Elektromagneten 6 verbunden ist.

Dem Thermoelement 8 ist ein PTC-Widerstand 10 zugeordnet, der in einem Stromkreis 11 in Serie mit einer Stromquelle 12 und einem Arbeitskontakt 13 angeordnet ist. Der Widerstand 10 ist als PTC-Widerstand bevorzugt ausgestaltet, die Stromquelle 12 bevorzugt das Wechselspannungsnetz mit 220 V. Der Arbeitskontakt 13 kann von einer beliebigen Handhabe oder von einem Stellglied eines Reglers betätigt sein.

Die beschriebene Anordnung arbeitet wie folgt:

Beheizt die Flamme 1 des Brenners 2 das Thermoelement 3, so gibt dieses Thermospannung ab, was einen Thermostrom unmittelbar hervorruft. Bei offenem Kontakt 13 fliesst der Thermostrom beim Ausführungsbeispiel nach Figur eins über das kalte Thermoelement 8 in die Spule 5 des Elektromagneten 6. Das kalte Thermoelement 8 wirkt sich demgemäss überhaupt nicht aus. Erlischt die Flamme 1 und wird statt dessen über nicht dargestellte Mittel der Kontakt 13 geschlossen, so wird der PTC-Widerstand 10 durch aus der Spannungsquelle 12 stammende Energie beheizt, so dass das Thermoelement 8 den Thermostrom über die Leitung 9, die Spule 5 und das nun kalte Thermoelement 3 treibt. Die Polung der Thermoelemente 3 und 8 ist so gehalten, dass die Leitung 7 den negativen Pol des Thermoelements 3 mit dem positiven Pol des Thermoelements 8 oder umgekehrt unmittelbar miteinander verbindet.

Daraus folgt, dass bei Beheizung beider Thermoelemente beide Thermospannungen beziehungsweise auch die Thermoströme sich addieren und die Spule 5 des Elektromagneten 6 besonders stark mit Energie beaufschlagt wird.

Bevorzugt lässt sich die beschriebene Anordnung für eine thermoelektrische Zündsicherung verwenden, wenn bei Ausfall der Flamme 1 des Brenners Thermostrom simuliert werden soll. Fällt demgemäss der Brenner 2 aus, so könnte der Kontakt 13 von einer Flammenüberwachungseinrichtung geschlossen werden, und es wird in den Betriebspausen des Brenners das Thermoelement 8 beheizt, so dass der Elektromagnet 6 mit Thermostrom gespeist bleibt. Eine wiederkehrende Flamme 1 am Brenner 2 könnte dazu benutzt werden, den Kontakt 13 wieder zu öffnen, so dass die Beheizung des Thermoelements 8 aufhört und das nun wieder erwärmte Thermoelement 3 die weitere Speisung des Elektromagneten sicherstellt.

Aus dem Ausführungsbeispiel gemäss Figur zwei geht eine Variante der Erfindung hervor, wobei die beiden Thermoelemente 3 und 8 parallel zueinander liegen. Die Pluspole beider Thermoelemente sind mit der Leitung 7 verbunden, die Minuspole beider Thermoelemente mit der Leitung 4. Beide Thermoelemente speisen somit mit gleicher Wirkstromrichtung die Spule 5 des Elektromagneten 6. Die Beheizung des Thermoelements 8 durch den PTC-Widerstand 10 ist identisch zum Ausführungsbeispiel gemäss Figur eins. Bei Beheizung des Thermoelements 3 findet somit eine Stromverzweigung einmal durch das kalte Thermoelement 8 und die Spule 5 statt, beim Beheizen des Thermoelements 8 liegen die Verhältnisse analog. Werden beide Thermoelemente 3 und 8 gemeinsam beheizt, speisen beide die Spule 5 des Elektromagneten 6. Der Elektromagnet ist Teil einer bekannten thermoelektrischen Zündsicherung.

**Patentansprüche**

1. Thermoelektrische Zündsicherung für eine brennstoffbeheizte Wärmequelle mit einem Zündbrenner, einer Anordnung von zwei in Serie geschalteten Thermoelementen und einem Elektromagneten, dem ein in einer Brennstoffzuleitung zum Zündbrenner angeordnetes Ventil zugeordnet ist, dadurch gekennzeichnet, dass beide Thermoelemente (3, 8) mit ungleichen Polen miteinander verbunden sind, dass das eine der beiden Thermoelemente dem Zündbrenner, das andere hingegen ausschliesslich einem elektrischen Heizwiderstand (10) zugeordnet ist, und nur dann von diesem beheizt ist, wenn eine Beheizung des anderen Thermoelements (3) durch den Zündbrenner (2) entfällt.

2. Thermoelektrische Zündsicherung nach Anspruch eins, dadurch gekennzeichnet, dass der Heizwiderstand (10) als PTC-Widerstand ausgebildet ist.

3. Thermoelektrische Zündsicherung für eine brennstoffbeheizte Wärmequelle mit einem Zündbrenner, einer Anordnung von zwei parallelgeschalteten Thermoelementen und einem Elektromagneten, dem ein in der Brennstoffzuleitung zum Zündbrenner angeordnetes Ventil zugeordnet ist, dadurch gekennzeichnet, dass beide Thermoelemente (3, 8) mit gleichen Polen miteinander verbunden sind und das eine Thermoelement ausschliesslich dem Zündbrenner, das andere einem elektrischen Heizwiderstand (10) zugeordnet ist, und nur dann von diesem beheizt ist, wenn eine Beheizung des anderen Thermoelements (3) durch den Zündbrenner (2) entfällt.

**Claims**

1. A thermoelectric flame failure device for a fuel-firing heat source comprising a pilot burner, an arrangement comprising two series-connected thermocouple, and an electromagnet, which has associated with it a valve included in a fuel supply line leading to the pilot burner, characterized in that two thermocouples (3, 8) are connected to each other at unlike poles, one of the two thermocouples is associated with the pilot burner and the other is associated only with an electric heating resistor (10) and is heated by the latter only when the other thermocouple (3) is not heated by the pilot burner (2).

2. A thermoelectric flame failure device according to claim 1, characterized in that the heating resistor (10) consists of a PTC resistor.

3. A thermoelectric flame failure device for a fuel-firing heat source comprising a pilot burner, an arrangement comprising two series-connected thermocouple, and an electromagnet, which has associated with it a valve included in a fuel supply line leading to the pilot burner, characterized in that two thermocouples (3, 8) are connected to each other like poles, one of the two thermocouples is associated only with the pilot burner and the other is associated with an electric heating resistor (10) and is heated by the latter only when the other thermocouple (3) is not heated by the pilot burner 62).

**Revendications**

1. Dispositif de sûreté d'allumage thermo-électrique pour une source de chaleur chauffée par un combustible et comportant un bec d'allumage, une combinaison de deux thermocouples disposés en série et un électro-aimant associé à une soupape disposée dans une conduite d'alimentation du bec d'allumage, caractérisé par le fait que les deux thermocouples (3, 8) sont connectés entre eux par leurs pôles opposés, et que l'un des thermocouples est associé au bec d'allumage tandis que l'autre est combiné exclusivement avec une résistance électrique (10) qui ne le chauffe que lorsque le thermocouple (3) n'est pas chauffé par le bec d'allumage (2).

2. Dispositif de sûreté d'allumage thermo-électrique suivant la revendication un, caractérisé par le fait que la résistance chauffante (10) est une résistance CTP.

3. Dispositif de sûreté d'allumage thermo-électrique pour une source de chaleur chauffée par une combustible et comportant un bec d'allumage, une combinaison de deux thermocouples disposés en parallèle et un électro-aimant associé à une soupape disposée dans une conduite d'alimentation du bec d'allumage, caractérisé par le fait que les deux thermocouples (3, 8) sont connectés entre eux par leurs pôles égaux, et que l'un des thermocouples est associé au bec d'allumage tandis que l'autre est combiné exclusivement avec une résistance électrique (10) qui ne le chauffe que lorsque le thermocouple (3) n'est pas chauffé par le bec d'allumage (2).

0071614

Fig.1

5

Fig. 2